Europäisches Patentamt

European Patent Office

Office européen des brevets

(11) Veröffentlichungsnummer: **0 005 539**
**B1**

# EUROPÄISCHE PATENTSCHRIFT

(45) Veröffentlichungstag der Patentschrift:
09.12.81

(21) Anmeldenummer: 79101491.3

(22) Anmeldetag: 16.05.79

(51) Int. Cl.³: **B 65 G 47/10,** B 65 G 1/04,
B 65 G '47/61

(54) **Fördereinrichtung für mit einem Aufhängeglied versehene Fördergutträger.**

(30) Priorität: 22.05.78 DE 7815346 U
10.07.78 DE 7820700 U

(43) Veröffentlichungstag der Anmeldung:
28.11.79 Patentblatt 79/24

(45) Bekanntmachung des Hinweises auf die Patenterteilung:
09.12.81 Patentblatt 81/49

(84) Benannte Vertragsstaaten:
CH FR NL SE

(56) Entgegenhaltungen:
DE-A-1 556 616
DE-A-2 100 199
DE-A-2 537 442
DE-B-2 130 783
DE-U-1 941 684
US-A-2 947 407

(73) Patentinhaber: J. Sandt AG, Lemberger Strasse 82,
D-6780 Pirmasens (DE)

(72) Erfinder: Stahl, Konrad Maschinenbauingenieur (grad.),
Schlossstrasse 39, D-6790 Landstuhl (DE)

(74) Vertreter: Klein, Friedrich, Königstrasse 154,
D-6750 Kaiserslautern (DE)

## Fördereinrichtung für mit einem Aufhängeglied versehene Fördergutträger

Die Erfindung betrifft eine Fördereinrichtung mit auf einer Laufschiene verfahrbaren und durch eine mit Mitnahmevorrichtungen versehene Kette antreibbaren Förderwagen für ein Aufhängeglied aufweisende Fördergutträger zur Verbindung eines aus Speicher- und Übergabevorrichtungen gebildeten Lagers mit einer Sammelstelle, wobei die auf Aufnahmeelementen der Speicher- und Übergabevorrichtungen gespeicherten Fördergutträger gruppenweise auf die Tragstange eines Förderwagens übergeben werden.

Durch die US-A-2 947 407 ist eine Fördereinrichtung für auf als Kleiderbügel ausgebildete Fördergutträger hängende Fördergutstücke bekannt. Die Fördereinrichtung besteht aus einem schrittweise arbeitenden Eingabeförderer, zwei hintereinander angeordneten Schleppkettenförderern und einem aus mehreren antriebslosen Hängebahnen gebildeten Sortierlager. Beide Schleppkettenförderer haben eine begrenzte offene Förderstrecke. Am Ende des ersten Schleppkettenförderers ist eine Übergabevorrichtung vorgesehen, die die Fördergutträger auf den zweiten Schleppkettenförderer übergibt. Durch den zweiten Schleppkettenförderer werden die Fördergutträger auf bestimmte Hängebahnen des Sortierlagers übergeben, wobei eine adressenmässige Sortierung stattfindet. Sofern die Anzahl adressengleicher Fördergutstücke grösser ist als die Aufnahmekapazität der Hängebahnen, werden mehrere und dabei meist voneinander entfernt liegende Hängebahnen mit Fördergutstücken ein und derselben Adresse beladen. In diesem Fall ist es für das Lagerpersonal umständlich und zeitaufwendig, alle Fördergutstücke ein und derselben Adresse zu einer Versandeinheit zusammenzustellen. Würden dagegen für jede Adresse stets so viele Hängebahnen bereitgehalten, dass auch bei grösstmöglicher Anzahl adressengleicher Fördergutstücke diese stets auf unmittelbar benachbarte Hängebahnen abgesetzt werden können, so hätte das Sortierlager einen übergrossen Platzbedarf.

Die DE-A-1 556 616 betrifft ein Verfahren zum Zusammenstellen von z.B. Versandhausartikeln zu einer Kommission unter Verwendung eines Sortierförderers. Die verschiedenen Artikelsorten sind nach Adressen geordnet in Lagerfächern abgelegt, aus denen sie mit Transportmitteln und Entnahmeeinrichtungen zu Kommissionierplätzen gebracht werden können. Der Sortierförderer enthält eine Vielzahl von eine Kommissionseinheit aufnehmenden Trägern, die in mehreren Förderkreisen umlaufen, wobei jedem Kommissionierplatz ein Förderkreis zugeordnet ist. Ein mit verschiedenen Artikelsorten zu beladender Träger verbleibt so lange in dem einem bestimmten Kommissionierplatz zugeordneten Förderkreis, bis die letzte umzuladende Artikelsorte aus dem Lagerfach entnommen, an den Kommissionierplatz gebracht und auf den Träger umgeladen wurde. Sofern jetzt die Kommission fertiggestellt ist, wird der Träger einer Versandstelle zugeführt. Fehlen dagegen noch Artikelsorten, so wird der Träger über einen anderen Förderkreis der entsprechenden Kommissionierstelle zugeleitet.

Durch die DE-A-2 537 442 ist eine Umladevorrichtung für auf Fördergutträgern hängende, mit Adressenangaben versehene Fördergutstücke bekannt, mit deren Hilfe eine Gruppe von Fördergutträgern, die in einem aus einer Vielzahl von Speicher- und Übergabevorrichtungen bestehenden Lager auf stangenförmigen Aufnahmeelementen hängen, in einem Zug auf die Tragstange eines Förderwagens eines Kreisförderers übergeben wird, wobei der Förderwagen während des Übergabevorganges stillsteht. Sofern es sich bei dem Lager um ein nach Kundenadressen orientiertes Sortierlager handelt, wird man möglichst viele adressengleiche Fördergutstücke im Lager ansammeln, um sie dann zwecks Einsparung von Versandkosten an einer Sammelstelle zu einer grösseren Versandeinheit zusammenzustellen. Da die Aufnahmeelemente der Speicher- und Übergabevorrichtungen nur eine begrenzte Aufnahmekapazität haben, werden bei einer diese Aufnahmekapazität übersteigenden Anzahl von adressengleichen Fördergutstücken mehrere Speicher- und Übergabevorrichtungen mit Fördergutstücken eines einzigen Kunden beladen.

Der Erfindung liegt die Aufgabe zugrunde, eine Fördereinrichtung nach dem Oberbegriff des Anspruches 1 zu schaffen, bei der zur raschen Zusammenstellung adressengleicher Fördergutstücke zu einer Versandeinheit sämtliche auf mehreren Speicher- und Obergabevorrichtungen gespeicherten Fördergutstücke ein und derselben Adresse möglichst gleichzeitig auf die Förderwagen umgeladen und in kürzestmöglichen Zeitabständen zur Sammelstelle transportiert werden. Diese Aufgabe wird durch die im Kennzeichenteil des Anspruches 1 angegebenen Merkmale gelöst.

Da sich in dem im Bereich der Abgabeenden der Aufnahmeelemente erstreckenden ersten Kreisförderer nur unbeladene und daher stets aufnahmebereite Förderwagen befinden, kann die Übergabe der auf einem Aufnahmeelement gespeicherten, auf Fördergutträgern hängenden Fördergutstücke an die das Lager mit der Sammelstelle verbindende Fördereinrichtung ohne nennenswerte Zeitverzögerung erfolgen. Sind mehrere Aufnahmeelemente mit Fördergutstücken ein und derselben Adresse beladen, können gleichzeitig so viele Aufnahmeelemente entladen werden, wie unbeladene Förderwagen im ersten Kreisförderer enthalten sind.

Bei der durch die vorstehend zitierte DE-A-2 537 442 bekannten Umladevorrichtung werden zwar alle auf einer Speicher- und Übergabevorrichtung des Lagers befindlichen Fördergutträger als Gruppe auf die Tragstange eines Förderwagens umgeladen, jedoch ist es hierbei erforderlich, dass der Förderwagen während derjenigen Zeit des Umladevorganges angehalten wird, in welcher die Fördergutträger von der Speicher- und Übergabevorrichtung auf eine Übergabeschiene geschoben werden. Ausser den hierdurch bedingten unvermeidlichen Wartezeiten, treten bei mechanisch angetriebenen Förderwagen wegen des häufigen Auskuppelns und anschliessenden Einkuppelns und des daraus resultierenden Stillsetzens und anschliessenden Beschleunigens der Förderwagen Schaltgeräusche und ein erhöhter Verschleiss auf.

Bei einer durch die DE-B-2 130 783 bekannten Fördereinrichtung erfolgt zwar das Übergeben einer Gruppe von Förderguttträgern auf die Tragstange eines Förderwagens bei kontinuierlichen Antrieb der Förderwagen und damit ohne Zeitverlust, jedoch ist zur Erreichung dieser an sich vorteilhaften Betriebsweise schon bei einer einzigen Übergabevorrichtung ein aussergewöhnlich grosser technischer Aufwand erforderlich. Daher sind Übergabevorrichtungen dieser Art für ein eine Vielzahl von Speicherplätzen aufweisendes grösseres Zwischenlager aus Kostengründen völlig ungeeignet.

Der Erfindung liegt daher die weitere Aufgabe zugrunde, eine Fördereinrichtung nach dem Anspruch 1 so weiterzubilden, dass mittels einfach aufgebauter Speicher- und Übergabevorrichtungen gespeicherte Förderguttträger gruppenweise auf die Tragstange kontinuierlich laufender Förderwagen übergeben werden können. Diese zusätzliche Aufgabe wird durch den Kennzeichenteil des Anspruches 2 gelöst.

Durch diese Ausbildung der Speicher- und Übergabevorrichtungen können Gruppen von Förderguttträgern auf einen innerhalb des ersten Kreisförderers kontinuierlich umlaufende Förderwagen übergeben werden, wobei lediglich zu beachten ist, dass die Übergabegeschwindigkeit der Aufnahmeelemente an die Fahrgeschwindigkeit des Förderwagens angepasst ist. Auf diese Weise ist es möglich, alle im ersten Kreisförderer befindlichen Förderwagen mit kontinuierlicher Geschwindigkeit stetig umlaufen zu lassen, so dass selbst dann, wenn den Speicher- und Übergabevorrichtungen vergleichsweise wenige Förderwagen zugeordnet sind, innerhalb kurzer Zeit einer der unbeladenen Förderwagen eine zu entladende Speicher- und Übergabevorrichtung erreicht. Da bei stetig umlaufenden Förderwagen der Umlade- bzw. Übergabevorgang einer Gruppe von Förderguttträgern in einer durch die Fahrgeschwindigkeit der Förderwagen bestimmten vergleichsweise kurzen Zeit erfolgt und überdies sämtliche Förderwagen des ersten Kreisförderers gleichzeitig beladen werden können, lässt sich eine grosse Anzahl von auf mehreren Aufnahmeelementen der Speicher- und Übergabevorrichtungen gespeicherten Förderguttträgern innerhalb kürzester Zeit aus dem Lager entnehmen und der Sammelstelle zuführen.

Gemäss einem weiteren Vorschlag der Erfindung sind die Aufnahmeelemente der Speicher- und Übergabevorrichtungen von Schneckenwellen gebildet, in deren schraubenlinienförmig verlaufenden Nut die Aufhängeglieder der Förderguttträger angeordnet sind.

Ein weiterer Vorschlag der Erfindung besteht darin, dass jeder Weiche ein Nebenförderer zugeordnet ist, der als Kreisförderer mit an sich bekannten ausschaltbaren Mitnahmevorrichtungen für die Förderwagen ausgebildet ist. Ein mittels einer Weiche aus dem ersten Kreisförderer ausgeschleuster beladener Förderwagen wird somit zunächst vom Nebenförderer übernommen und an seinem Abgabeende bei abgekuppelter Mitnahmevorrichtung so lange gespeichert, bis er an eine freie Mitnahmevorrichtung des zweiten Kreisförderers übergeben werden kann. Der zweckmässigerweise für die gleichzeitige Aufnahme mehrerer Förderwagen eingerichtete Nebenförderer bildet auf diese Weise eine Pufferstrecke zwischen dem ersten und zweiten Kreisförderer der Fördereinrichtung. Der Nebenförderer ermöglicht daher beim Ausschleusen mehrerer Förderwagen aus dem ersten Kreisförderer auch dann einen ungestörten Umlauf der in diesem Kreisförderer verbleibenden Förderwagen, wenn der zweite Kreisförderer nicht sofort alle ausgeschleusten Förderwagen übernehmen kann.

Für das Wiedereinschleusen unbeladener Förderwagen aus dem zweiten in den ersten Kreisförderer dient ein weiterer Nebenförderer, der ebenfalls als Kreisförderer mit an sich bekannten ausschaltbaren Mitnahmevorrichtungen ausgebildet ist. Dieser zweite Nebenförderer ist zweckmässigerweise ebenfalls für die Aufnahme mehrerer, in diesem Fall unbeladener Förderwagen ausgelegt. Wenn aus dem ersten Kreisförderer eine grössere Anzahl beladener Förderwagen dicht hintereinander ausgeschleust wird, können mit Hilfe des als Leerwagenspeicher wirkenden zweiten Nebenförderers die freien Plätze im ersten Kreisförderer rasch wieder mit unbeladenen Förderwagen besetzt werden, so dass im Kreis der umlaufenden Förderwagen keine Lücken entstehen.

Nachfolgend ist ein in der Zeichnung dargestelltes Ausführungsbeispiel beschrieben.

Es zeigen:
Fig. 1 eine symbolhafte Darstellung der Fördereinrichtung, des Lagers und der Sammelstelle;
Fig. 2 eine vergrösserte symbolhafte Darstellung eines Nebenförderers zwischen zwei Kreisförderern der Fördereinrichtung;
Fig. 3 eine schaubildliche Darstellung einer Speicher- und Übergabevorrichtung und eines Teils der Fördereinrichtung.

Eine Sortieranlage für hängendes Fördergut umfasst einen Umlaufhängeförderer 1, ein Lager 2, eine Fördereinrichtung 3 und eine Sammelstelle 50. Die Fördereinrichtung 3 besteht bei diesem Ausführungsbeispiel aus drei in sich geschlossenen, miteinander verbundenen Förderschleifen 51, 52, 53, die von Kreisförderern 70, 71, 72 gebildet sind. Die Förderschleifen 51, 52 sind innerhalb des Lagers 2 angeordnet, während die Förderschleife 53 der Sammelstelle 50 zugeordnet ist. Als Förderguttträger dienen Kleiderbügel, deren Haken Aufhängeglieder bilden.

Der Umlaufhängeförderer 1 weist eine aus Profilschienen gebildete Führungsbahn 6 auf, in der Träger 7 mittels Rollen 8 geführt sind. Die Träger 7 sind mit einer in der Führungsbahn 6 laufenden Förderkette 9 verbunden und werden von ihr kontinuierlich angetrieben. An jedem Träger 7 ist eine Haltevorrichtung 10 befestigt, die zwei abgewinkelte Schwenkglieder 11 aufweist. Die Schwenkglieder 11 stützen sich durch Schwerkraftwirkung an einem Anschlag 12 des Trägers 7 ab und bilden in dieser Stellung eine V-förmige Aufnahme für das Aufhängeglied 5 eines Förderguttragers 4.

Das Lager 2 besteht aus einer Vielzahl von Speicher- und Übergabevorrichtungen, die als Aufnahmeelement für die Fördergutträger 4 je eine horizontal verlaufende Schneckenwelle 13 aufweisen. Jede Schneckenwelle 13 ist im Bereich des dem Umlaufhängeförderer 1 zugekehrten Endes in einer an einem nicht dargestellten Gestell befestigten Lagerplatte 14 und im Bereich des anderen Endes in einem schalenförmigen, nach oben offenen Lager 15 aufgenommen, das ebenfalls an dem Gestell befestigt ist. Jede Schneckenwelle 13 ist an dem dem Umlaufhängeförderer 1 zugekehrten Ende mit einem Bremsmotor 16 verbunden, mit dessen Hilfe die Schneckenwelle 13 wahlweise intermittierend oder kontinuierlich angetrieben werden kann. Die Drehrichtung des Bremsmotors 16 ist so festgelegt, dass die mit ihren Aufhängeglied 5 in der Schneckennut 17 der Schneckenwelle 13 aufgenommenen Fördergutträger 4 zur Fördereinrichtung 3 transportiert werden. Daher bildet das dem Umlaufhängeförderer 1 zugekehrte Ende jeder Schneckenwelle 13 ein Aufgabeende 18 und das der Förderschleife 51 bzw. 52 zugekehrte Ende ein Abgabeende 19.

Der Umlaufhängeförderer 1 weist für jede Schneckenwelle 13 eine bekannte Abwurfstation 20 mit einer nicht näher dargestellten Zielsteuervorrichtung auf, die durch an den Haltevorrichtungen 10 angeordnete, ebenfalls nicht dargestellte Zielkennzeichen schaltbar ist. Jede Abwurfstation 20 enthält eine schräg ansteigende Schaltleiste 21, die mittels der Zielsteuervorrichtung von einer unwirksamen Ruhestellung in eine Arbeitsstellung bewegbar ist, in der sie in die Bewegungsbahn der Schwenkglieder 11 der Haltevorrichtungen 10 ragt. Zwischen den Abwurfstationen 20 und den Schneckenwellen 13 sind schräg abwärts verlaufende Gleitstangen 22 angeordnet, die mittels Haltern 23 am Gestell befestigt sind und oberhalb der Aufgabeenden 18 der entsprechenden Schneckenwellen 13 enden.

Die Kreisförderer 70, 71 der innerhalb des Lagers 2 angeordneten Förderschleifen 51, 52 der Fördereinrichtung 3 weisen an dem nicht dargestellten Gestell befestigte Laufschienen 24 auf, auf denen Förderwagen 25 angeordnet sind. Die Förderwagen 25 bestehen aus zwei abgekröpften Stangen 26, einer deren seitwärts abgebogene untere Enden miteinander verbindenden Tragstange 27 und je einer am oberen Ende der Stangen 26 drehbar gelagerten Profilrolle 28. Die eine Stange 26 trägt eine Aufsatz 29, dessen oberes Ende mit einem schmalen Mitnahmekopf 30 versehen ist. Die andere Stange 26 trägt einen breiteren Auslösekopf 31.

Jedem Kreisförderer 70, 71 ist eine stetig umlaufende Förderkette 33 zugeordnet, die in an dem nicht dargestellten Gestell befestigten Profilschienen 32 angeordnet ist und zur Mitnahme der Förderwagen 25 dienende Kupplungen 34 aufweist. Jede Kupplung 34 weist eine Lagerplatte 35 auf, an der zwei durch eine Langloch-Stift-Verbindung gelenkig miteinander verbundene Kupplungshebel 36, 37 angeordnet sind. Die Kupplungshebel 36, 37 sind an der Unterseite ausgespart und bilden auf diese Weise eine zur Aufnahme des Mitnahmekopfes 30 vorgesehene, nicht näher bezeichnete Aussparung.

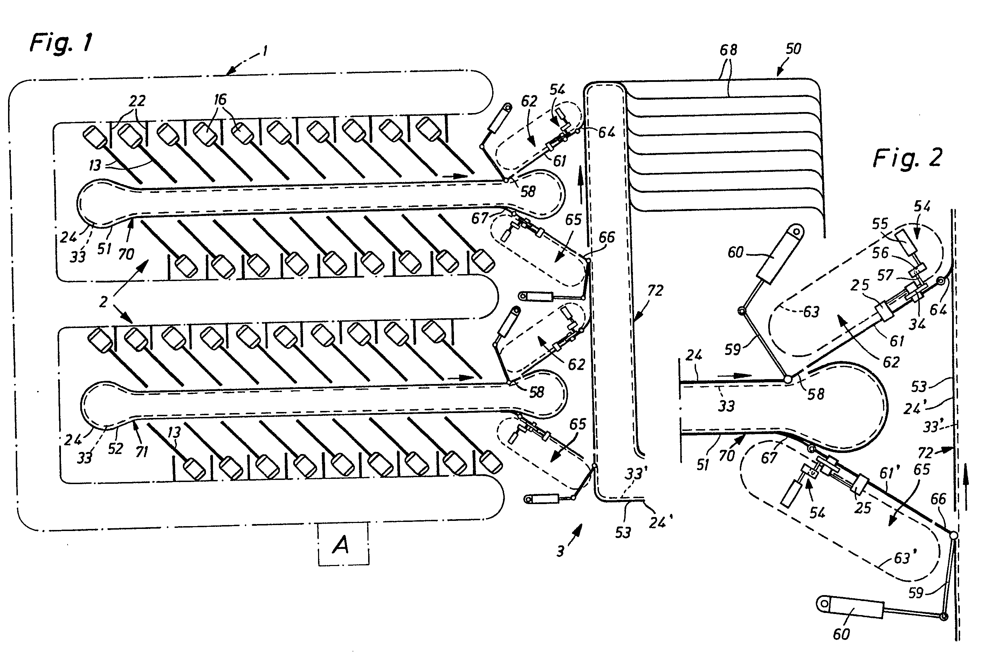

Die Kupplungen 34 lassen sich mittels Schaltvorrichtungen 54 (Fig. 2) zur Freigabe eines Förderwagens 25 ausschalten. Jede Schaltvorrichtung 54 weist ein mittels eines Druckluftzylinders 55 zwischen einer Ruhe- und einer Schaltstellung hin- und herschiebbares Schaltstück 56 auf, das in der Schaltstellung mit einem an einem Kupplungshebel 36 bzw. 47 angeordneten Stift 57 zusammenwirkt und dadurch ein Hochschwenken der Kupplungshebel 36, 37 herbeiführt.

Der der Sammelstelle 50 zugeordnete Kreisförderer 72 ist identisch aufgebaut wie die Kreisförderer 70, 71. Die in den Figuren 1 und 2 abgebildeten Laufschienen des Kreisförderers 72 sind mit 24' bezeichnet, während die Förderkette mit dem Bezugszeichen 33' versehen ist.

Die Umlaufrichtung der Förderwagen 25 in den Förderkreisen 51, 52, 53 ist durch Pfeile gekennzeichnet.

Dem Abgabeende 19 einer jeden Schneckenwelle 13 ist eine Gleitstange 38 zugeordnet, die mittels eines Halters 39 an dem nicht dargestellten Gestell befestigt ist. Die Gleitstangen 38 liegen mit ihrem einen Ende dicht an der Stirnseite der zugeordneten Schneckenwelle 13 an und verlaufen schräg abwärts. Das untere Ende der Gleitstangen 38 endet oberhalb der Bewegungsbahn der Tragstangen 27 und seitlich der Stangen 26, so dass die Förderwagen 25 an den Gleitstangen 38 ohne anzustossen vorbeilaufen können.

Zum Ausschleusen von Förderwagen 25 aus den Förderschleifen 51, 52 der Fördereinrichtung 3 weist jeder Kreisförderer 70, 71 eine zwischen zwei Endstellungen schwenkbare Weiche 58 auf. An der Weiche 58 ist ein Hebel 59 befestigt, der mit einem Druckluftzylinder 60 verbunden ist. In der einen Endstellung fluchtet die Weiche 58 mit der Laufschiene 24 und in der anderen Endstellung mit einer Laufschiene 61 eines Nebenförderers 62. Der Nebenförderer 62 ist ebenso wie die Kreisförderer 70, 71 als Kreisförderer aufgebaut und weist dementsprechend eine der Förderkette 33 entsprechende Förderkette 63 auf, an der die gleichen Kupplungen 34 angeordnet sind wie bei den Kreisförderern 70, 71. An dem der Weiche 58 abgekehrten Ende der Laufschiene 61 ist eine schwenkbare, federbelastete Weiche 64 angeordnet, deren freies Ende normalerweise an der Laufschiene 24' des Kreisförderers 72 anliegt. Im Bereich der Weiche 64 ist eine Schaltvorrichtung 54 angeordnet, mit deren Hilfe die Kupplungen 34 des Nebenförderers 62 in Freigabestellung geschaltet und dadurch am Ende der Laufschiene 61 befindliche Förderwagen 25 stillgesetzt werden können. Die Länge des Nebenförderers 62 ist derart bemessen, dass er gleichzeitig mehrere Förderwagen 25 aufzunehmen vermag, wodurch er die Funktion einer Pufferstrecke ausüben kann.

Zur Wiedereinschleusung von Förderwagen 25 aus der Förderschleife 53 in die Förderschleifen 51, 52 sind den Kreisförderern 70, 71, 72 weitere Nebenförderer 65 zugeordnet, die in entsprechender Weise wie die Nebenförderer 62 aufgebaut sind. Bei dem in Figur 2 dargestellten Nebenförderer 65 ist die Laufschiene mit 61' und die Förderkette mit 63' bezeichnet. Der Unterschied zwischen den Nebenfördereren 62 und 65 besteht darin, dass die der Weiche 58 entsprechende Weiche 66 dem Kreisförderer 72 und die der Weiche 64 entsprechende Weiche 67 dem Kreisförderer 70 bzw. 71 zugeordnet ist.

Die Sammelstelle 50 besteht aus mehrern, zur Aufnahme von Förderwagen 25 dienenden antriebslosen Nebenstrecken 68, die mittels nicht dargestellter schaltbarer Weichen mit der Laufschiene 24' des Kreisförderers 72 verbunden sind.

Die Einrichtung arbeitet wie folgt:

An der Aufgabestelle A des Umlaufhängeförderers 1 werden auf Fördergutträgern 4 hängende, mit einer Kundenadresse versehene Fördergutstücke nacheinander an den stetig angetriebenen Umlaufhängeförderer 1 übergeben, wobei jeweils nur ein Fördergutträger 4 in eine Haltevorrichtung 10 eingehängt wird. Beim Einhängen eines Fördergutträgers 4 in die Haltevorrichtung 10 wird an dem an der Haltevorrichtung 10 angeordneten Zielkennzeichenträger eine der Kundenadresse entsprechende Kombination von Zielkennzeichen gesetzt.

Die mit einem Fördergutträger 4 beladene Haltevorrichtung 10 läuft nun durch die Abwurfstation 20 des Umlaufhängeförderers 1. Sobald sich die Haltevorrichtung 10 einer Abwurfstation 20 nähert, deren Zielsteuervorrichtung auf die am Zielkennzeichenträger der Haltevorrichtung 10 gespeicherten Zielkennzeichen anspricht, wird die Schaltleiste 21 in die Arbeitsstellung bewegt, worauf eines der Schenkglieder 11 aufläuft, sich anhebt und dadurch das Aufhängeglied 5 des Fördergutträgers 4 freigibt. Der Fördergutträger 4 fällt mit seinem Aufhängeglied 5 auf die Gleitstange 22, rutscht auf ihr nach abwärts und gleitet schliesslich auf die der Abwurfstation 20 zugeordnete Scheckenwelle 13, wobei das Aufhängeglied 5 des Fördergutträgers 4 in der Schneckennut 17 aufgenommen wird.

Nach der Aufnahme des Fördergutträgers 4 führt der Bremsmotor 16 eine volle Umdrehung der Schneckenwelle 13 durch, was zur Folge hat, dass der Fördergutträger 4 um das Mass der Steigung der Schneckennut 17 vom Aufgabeende 18 weg in Richtung des Abgabeendes 19 bewegt wird. Hierdurch wird der unterhalb des unteren Endes der Gleitstange 22 liegende Abschnitt der Schneckennut 17 frei für die Aufnahme eines weiteren Fördergutträgers 4.

Die Zielsteuervorrichtung einer jeden Abwurfstation 20 bewirkt, dass nur Fördergutträger 4 mit Fördergutstücken gleicher Adresse auf eine bestimmte Schneckenwelle 13 abgegeben werden. Daher dienen die Schneckenwellen 13 des Lagers 2 zur adressenmässigen Sortierung der in beliebiger Reihenfolge an den Umlaufhängeförderer 1 übergebenen Fördergutstücke. Da jede Schneckenwelle 13 nach der Aufnahme eines Fördergutträgers 4 eine volle Umdrehung ausführt und dabei die auf der Schneckenwelle 13 befindlichen Fördergutträger 4 um einen der Steigung der Schneckennut 17 entsprechenden Vorschubschritt in Richtung des Abgabeendes 19 transportiert, kann eine grössere Anzahl von Fördergutträgern 4 mit jeweils gleich grossem gegenseitigem Abstand auf den Schneckenwellen 13 gespeichert werden.

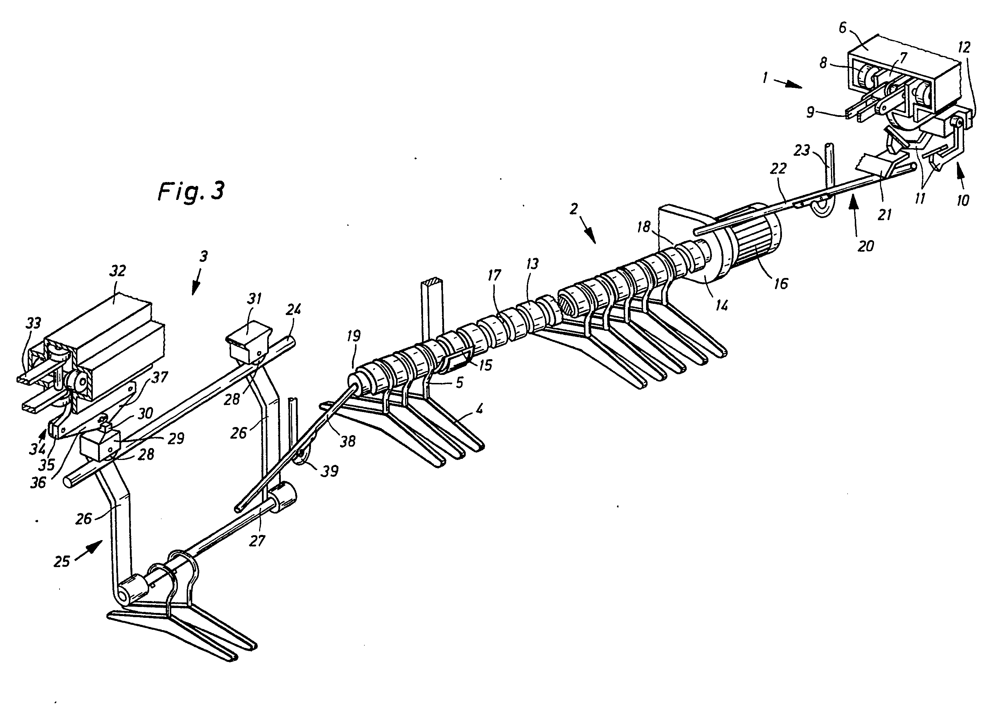

Die Länge der Schneckenwellen 13 kann beispielsweise derart bemessen sein, dass genau so viel Fördergutträger 4 gespeichert werden können, wie die Tragstange 27 der Förderwagen 25 aufzunehmen vermag. Wie aus Fig. 3 ersichtlich, können jedoch auch längere Schneckenwellen 13 verwendet werden, wodurch die Speicherkapazität der Schneckenwelle 13 die Aufnahmekapazität der Tragstange 27 um das Doppelte oder ein Mehrfaches übersteigt.

Sobald der vorderste Fördergutträger 4 das Abgabeende 19 erreicht hat und somit die Schneckenwelle 13 voll beladen ist, wird durch bekannte und deshalb nicht näher erläuterte schaltungsmässige Massnahmen verhindert, dass weitere Fördergutträger 4 auf die betroffene Schneckenwelle 13 abgeworfen werden. Die nicht mehr an die voll beladene Schneckenwelle 13 abgebbaren Fördergutträger 4 werden nun an die nächste noch unbesetzte Schneckenwelle 13 des Lagers 2 abgegeben. Auf diese Weise ist es möglich, dass bei einer die Speicherkapazität einer Schneckenwelle 13 übersteigenden Anzahl von Fördergutstücken gleicher Adresse zwei oder mehrere Schneckenwellen 13 mit Fördergutstücken ein und derselben Adresse beladen werden.

Sollen nun alle auf verschiedenen Schneckenwellen 13 gespeicherten Fördergutstücke mit einer bestimmten Kundenadresse zur Sammelstelle 50 transportiert werden, um sie dort zu einer Versandeinheit zusammenzufassen, so müssen zunächst die die Fördergutstücke tragenden Fördergutträger 4 von den Schneckenwellen 13 auf die in den Förderschleifen 51, 52 umlaufenden Förderwagen 25 umgeladen werden.

Vor Beginn des Umlade- bzw. Übergabevorganges muss zunächst mittels bekannter und deshalb nicht näher erläuterter, beispielsweise mechanisch oder optisch arbeitender Erkennungsvorrichtungen der Beladezustand der an den betreffenden Schneckenwellen 13 vorbeilaufenden Förderwagen 25 überprüft werden. Nähert sich ein unbeladener Förderwagen 25 einer zu entladenden Schneckenwelle 13, so wird mittels einer auf die Entfernung des Förderwagens 25 zu der Schneckenwelle 13 ansprechenden zweiten Erkennungsvorrichtung der Zeitpunkt bestimmt, zu dem der Bremsmotor 16 eingeschaltet wird. Zur Übergabe einer Gruppe von Fördergutträgern 4 treibt daraufhin der Bremsmotor 16 die Schneckenwelle 13 so lange an, bis der letzte Fördergutträger 4 an die Gleitstange 38 abgegeben wurde. Die Fördergutträger 4 gleiten mit ihren Aufhängegliedern 5 auf der Gleitstange 38 abwärts und rutschen schliesslich auf die Tragstange 27 des sich am unteren Ende der Gleitstange 38 entlangbewegenden Förderwagens 25. Während des Übergabevorganges ist die Fördergeschwindigkeit der Schneckenwelle 13 an die Geschwindigkeit des Förderwagens 25 derart angepasst, dass alle Fördergutträger 4 der zu übergebenden Gruppe von Fördergutträgern 4 auf der Tragstange 27 abgesetzt werden.

Die Fördereinrichtung 3 ist so ausgelegt, dass in den zwischen je zwei Reihen von Schneckenwellen 13 angeordneten Förderschleifen 51, 52 unbeladene Förderwagen 25 umlaufen. Da somit an den zu entladenden Schneckenwellen 13 stets aufnahmebereite Förderwagen 25 vorbeilaufen, können gleichzeitig so viele Schneckenwellen 13 entladen werden wie Förderwagen 25 in den Förderschleifen 51, 52 enthalten sind. Auf diese Weise kann innerhalb kürzester Zeit eine grosse Anzahl von auf mehreren Schneckenwellen 13 gespeicherten Födergutstücken mit gleicher Adresse an die Förderwagen 25 übergeben werden. Ein beladener Förderwagen 25 erhält automatisch während des Beladens oder unmittelbar danach eine Zieladresse für eine bestimmte Nebenstrecke 68 innerhalb der Sammelstelle 50.

Sobald sich ein beispielsweise im Kreisförderer 70 der Förderschleife 51 befindlicher beladener Förderwagen 25 der Weicher 58 nähert, wird diese in Richtung der Laufschiene 61 verschwenkt, wodurch der betroffene Förderwagen 25 aus dem Kreisförderer 70 ausgeschleust und in den Nebenförderer 62 eingeschleust wird. Hier erfolgt nun der Transport des Förderwagens 25 in der gleichen Weise wie im Kreisförderer 70, indem eine Kupplung 34 den Mitnahmekopf 30 erfasst und den Förderwagen 25 auf der Laufschiene 61 in Richtung des Kreisförderers 72 der Förderschleife 53 verschiebt. Nähert sich im Kreisförderer 72 der Förderschleife 53 eine unbesetzte Kupplung 34, so wird der Förderwagen 25 unmittelbar über die Weiche 64 in den Kreisförderer 72 eingeschleust, worauf er von der unbesetzten Kupplung 34 erfasst und zur Sammelstelle 50 gefahren wird. Nähert sich dagegen im Kreisförderer 72 ein Förderwagen 25, so wird mittels der Schaltvorrichtung 54 die den Förderwagen 25 antreibende Kupplung 34 des Nebenförderers 62 in Freigabestellung geschaltet und dadurch der Förderwagen 25 unter der weiterlaufenden Förderkette 63 stillgesetzt. Die Schaltvorrichtung 54 wird erst wieder in Ruhestellung umgeschaltet, wenn sich im Kreisförderer 72 eine unbesetzte Kupplung 34 nähert. Da die Nebenförderer 62 für die gleichzeitige Aufnahme mehrerer Förderwagen 25 ausgelegt sind, können aus den Kreisförderern 70, 71 auch dann dicht hintereinander mehrere Förderwagen 25 ausgeschleust werden, wenn der Kreisförderer 72 nicht sofort alle ausgeschleusten Förderwagen 25 übernehmen kann. Durch die als Pufferstrecken wirkenden Nebenförderer 62 wird daher vermieden, dass nach dem gleichzeitigen Beladen mehrerer Förderwagen 25 die zuletzt an der Weiche 58 ankommenden Förderwagen 25 erst noch einmal oder gar mehrmals den gesamten Kreisförderer 70 bzw. 71 durchlaufen müssen, bis auch sie an den Kreisförderer 72 übergeben werden können.

Auf die gleiche Weise wie beladene Förderwagen 25 aus den Kreisförderern 70, 71 in die entsprechenden Nebenförderer 62 ausgeschleust und von diesen an den Kreisförderer 72 übergeben werden, werden im Kreisförderer 72 enthaltene unbeladene Förderwagen 25 über die Nebenförderer 65 in die Kreisförderer 70, 71 eingeschleust. Da auch die Nebenförderer 65 gleichzeitig mehrere Förderwagen 25 aufnehmen können und daher für die unbeladenen Förderwagen 25 eine Pufferstrecke bilden, können auch dann, wenn in den Kreisförderern 70, 71 durch Ausschleusen mehrerer beladener Förderwagen 25 unmittelbar hintereinander mehrere Lücken entstehen, diese rasch wieder mit unbeladenen Förderwagen 25 geschlossen werden.

**Patentansprüche**

1. Fördereinrichtung (3) mit auf einer Laufschiene (24, 24') verfahrbaren und durch eine mit ein- und ausrückbaren Mitnahmevorrichtungen (34) versehene Kette (33) antreibbaren Förderwagen (25) für ein Aufhängeglied (5) aufweisende Fördergutträger (4) zur Verbindung eines aus Speicher- und Übergabevorrichtungen gebildeten Lagers (2) mit einer Sammelstelle (50), wobei die auf Aufnahmeelementen (13) der Speicher- und Übergabevorrichtungen gespeicherten Fördergutträger (4) gruppenweise auf die Tragstange (27) eines Förderwagens (25) übergeben werden, dadurch gekennzeichnet, dass mindestens ein erster Kreisförderer (70 bzw. 71) für unbesetzte Förderwagen (25) angeordnet ist, dessen Laufschienen (24) entlang der Abgabeenden (19) der Aufnahmeelemente (13) verlaufen und dass der Kreisförderer (70 bzw. 71) zur Übergabe von beladenen Förderwagen (25) mittels schaltbarer Weichen (58, 66) mit einem zweiten Kreisförderer (72) verbunden ist, dessen Laufschienen (24') entlang der Nebenstrecken (68) der Sammelstelle (50) angeordnet sind.

2. Fördereinrichtung nach Anspruch 1, dadurch gekennzeichnet, dass das Abgabeende (19) der Aufnahmeelemente (13) oberhalb der Tragstange (27) der Förderwagen 25 angeordnet ist und jedes Aufnahmeelement (13) nach der Aufnahme eines Fördergutträgers (4) um einen wenigstens dem Abstand zwischen zwei Fördergutträgern (4) entsprechenden Vorschubschritt weiterschaltet und zur Übergabe der Fördergutträger (4) an einen Förderwagen (25) eine wenigstens der Summe der Vorschubschritte entsprechende Vorschubbewegung ausführt, deren Geschwindigkeit bei sich relativ zu den Aufnahmeelementen (13) bewegenden Förderwagen (25) an deren Fahrgeschwindigkeit angepasst ist.

3. Fördereinrichtung nach Anspruch 2, dadurch gekennzeichnet, dass die Aufnahmeelemente von Schneckenwellen (13) gebildet sind.

4. Fördereinrichtung nach einem der Ansprüche 1 bis 3, dadurch gekennzeichnet, dass jeder schaltbaren Weiche (58 bzw. 66) ein Nebenförderer (62 bzw. 65) zugeordnet ist, der als Kreisförderer mit einer Laufschiene (61 bzw 61') und einer Kette 33 mit Mitnahmevorrichtungen (34) ausgebildet ist, und dass jeder Nebenförderer (62 bzw. 65) mittels einer weiteren Weiche (64 bzw. 67) mit dem entsprechenden Kreisförderer (72 bzw. 70, 71) verbunden ist.

**Revendications**

1. Installation de manutention (3), comportant des chariots (25) déplaçables sur un rail (24, 24') et mûs par une chaîne (33) munie de dispositifs entraîneurs (34) embrayables et débrayables pour des supports (4) des articles à transporter, qui comportent un organe de suspension, destinée à relier un dépôt (2) formé de dispositifs de stockage et de transfert à un poste de groupage (50), les supports (4) accumulés sur des éléments récepteurs (13) des dispositifs de stockage et de transfert étant transférés par groupes sur la tige support (27) d'un chariot, caractérisée en ce qu'il est prévu au moins un premier transporteur circulaire (70 ou 71) pour les chariots (25) vides, dont les rails (24) s'étendent le long des extrémités de déchargement (19) des éléments récepteurs (13) et en ce que ce transporteur circulaire (70 ou 71) est, pour le transfert des chariots (25) chargés, relié au moyen d'aiguilles manoeuvrables (58, 66) à un second transporteur circulaire (72), dont les rails (24') sont disposés le long des voies de rangement (68) du poste de groupage (50).

2. Installation selon la revendication 1, caractérisée en ce que l'extrémité de déchargement (19) des éléments récepteurs (13) est située au-dessus de la tige support (27) des chariots (25) et chaque élément (13), après réception d'un support (4), avance d'un pas correspondant au moins à la distance entre deux supports successifs et, pour le transfert des supports à un chariot (25), exécute un mouvement d'avance au moins égal à la somme des pas d'avancement, dont la vitesse est adaptée à celle des chariots (25) lorsqu'ils se déplacent relativement aux éléments récepteurs.

3. Installation selon la revendication 2, caractérisée en ce que les éléments récepteurs sont fermés par des vis sans fin (13).

4. Installation selon l'une quelconque des revendications 1 à 3, caractérisée en ce qu'à chaque aiguille (58 ou 66) est associé un transporteur auxiliaire (62 ou 65) conformé en transporteur circulaire avec un rail (61 ou 61') et une chaîne (33) munie de dispositifs entraîneurs (34) et en ce que chaque transporteur auxiliaire est relié au moyen d'une autre aiguille (64 ou 67) au transporteur circulaire principal correspondant (72 ou 70, 71).

**Claims**

1. Conveyor appliance (3) with conveyor carriages (25), transportable on a rail track (24, 24') and drivable trough a chain (33) provided with an engageable and disengageable take-up device (34), for a conveyed goods carrier (4) having a suspension member (5) said conveyor appliance being adapted for connection to a store (2) formed from storage and delivery devices with a collecting position (50), wherein the conveyed goods carriers (4) stored on receiving elements (13) of the storage and delivery devices are delivered groupwise on the carrier rod (27) of a conveyor carriage (25), characterised in that at least one first circular conveyor (70 or 71) is arranged for disengaged conveyor carriages (25), the rail track (24) of which runs along the delivery end (19) of the receiving element (13) and that the circular conveyor (70 or 71) is connected for the delivery of loaded conveyor carriages (25) by means of controllable switches (58, 66) with a second circular conveyor (72) the rail tracks (24') of which are engaged along the subsidiary stretch (68) of the collecting position (50).

2. Conveyor appliance according to claim 1, characterised in that the delivery end (19) of the receiving element (13) is arranged above the carrier rod (27) of the conveyor carriage (25) and each receiving element (13) after the reception of a conveyed goods carrier (4) advances through a feed step corresponding at least to the spacing between two conveyed goods carriers (4) and for delivery of the conveyed goods carrier 4 on a conveyor carriage (25) carries out a feed movement corresponding at least to the total of the feed steps, the speed of which is adapted to the travelling speed of the conveyor carriage (25) moving relativ to the receiving elements (13).

3. Conveyor device according to claim 2, characterised in that the receiving elements are formed by worm shafts (13).

4. Conveyor device according to one of claims 1 to 3, characterised in that for each controllable switch (58 or 66) a subsidiary conveyor (62 or 65) is arranged, which is constructed as a circular conveyor with a rail track (61 or 61') and a chain 33 with take-up devices (34) and that each subsidiary conveyor (62 or 65) is connected by means of a further switch (64 or 67) with the corresponding circular conveyor (72 or 70, 71).

Fig. 1

Fig. 2

Fig. 3

0 005 539